# EUROPÄISCHE PATENTSCHRIFT

(11) **EP 1 602 458 B1**
(45) Veröffentlichungstag und Bekanntmachung des Hinweises auf die Patenterteilung: **15.08.2007**
(21) Anmeldenummer: 05010954.5
(22) Anmeldetag: 20.05.2005
(51) Int. Cl.: B25J 19/00

(54) **Roboterhandachse mit einer Schlauchführung für einen Lackierroboter**
Robot wrist with hose guidance for a painting robot
Poignet de robot avec guidage de tuyau pour un robot de peinture

(30) Priorität: 01.06.2004 DE 102004026573
(43) Veröffentlichungstag der Anmeldung: 07.12.2005
(73) Patentinhaber: Dürr Systems GmbH, 70435 Stuttgart (DE)
(72) Erfinder: Melcher, Rainer, 71720 Oberstenfeld (DE)
(74) Vertreter: Beier, Ralph

(56) Entgegenhaltungen:
- EP-A- 0 756 918
- EP-A- 0 873 826
- DE-A1- 10 216 081

## Beschreibung

Die Erfindung betrifft eine Roboterhandachse gemäß dem Oberbegriff des Anspruchs 1.

Eine solche Roboterhandachse ist aus der EP-A-0 756 918 bekannt.

Bei modernen Lackierrobotern mit einer hochflexiblen Roboterhandachse müssen mehrere Schläuche durch die Roboterarme und die Roboterhandachse hindurchgeführt werden, wobei die einzelnen Schläuche beispielsweise das aufzutragende Beschichtungsmittel oder Antriebsluft zum Antrieb einer Zerstäuberturbine zuführen. Zur Schlauchführung in der Roboterhandachse sind zwei Varianten bekannt, die im Folgenden kurz beschrieben werden.

In einer Variante weist die Roboterhandachse feste, meist glatt polierte Metallröhren auf, die gerade oder gebogen sein können und die Schläuche aufnehmen. Die Übergänge zwischen den einzelnen Metallröhren sollen dabei möglichst gerade oder mit kleinstmöglichen Winkeländerungen erfolgen, wobei kleine Radien oder sogar scharfkantige Übergänge vermieden werden, um die mechanischen Belastungen der Schläuche bei einer Änderung der Stellung der Roboterhandachse gering zu halten.

In einer anderen Variante werden die Schläuche dagegen in einem in die Roboterhandachse eingebauten flexiblen Schutzschlauch verlegt. Vorteilhaft an dieser Variante ist der kontinuierlichere Verlauf der Schlauchdurchführung, da die Krümmungsradien in der Regel größer sind. Der Schutzschlauch ist am Abtriebsflansch der Roboterhandachse befestigt und dreht sich mit dem Schlauchpaket mit. Dieser Schutzschlauch wird vorzugsweise jeweils am Ende seiner beiden Seiten mit gleichgerichteter Drehbewegung angetrieben, um eine größere mechanische Torsionsbelastung zu vermeiden. Die synchrone Drehung des Schutzschlauchs mit den darin geführten Schläuchen verhindert vorteilhaft, dass die Schläuche an der Innenwand des Schutzschlauchs schleifen. Stattdessen müssen die in dem Schutzschlauch geführten Schläuche lediglich den Relativbewegungen standhalten, die aufgrund der axialen Bewegungen bei einer Stellungsänderung der Roboterhandachse entstehen.

Nachteilig an den beiden vorstehend beschriebenen bekannten Varianten einer Schlauchführung in einer Roboterhandachse ist die Tatsache, dass die Schläuche beim Knicken oder Drehen der Roboterhandachse ihre Lage in der Schlauchführung ändern. Hierbei besteht die Gefahr, dass sich durch axiales Dehnen und Stauchen der Schläuche in der Schlauchführung Schlaufen bilden, die im restlichen Schlauchpaket eingeklemmt werden, knicken und sehr schnell verschleißen. Darüber hinaus können sich die Schläuche in unterschiedlichen Positionen verspannen und dann unter hohem Druck gegeneinander gleiten.

Aus DE 102 16 081 A1 und DE 195 09 116 A1 sind Schlauchführungselemente bekannt, die eine geordnete Führung von Schläuchen oder sonstigen Leitungen ermöglichen. Bei DE 102 16 081 A1 dient das Schlauchführungselement jedoch zur Führung von Leitungen bzw. Schläuchen außerhalb der Roboterhandachse, während DE 195 09 116 A1 lediglich die konstruktive Gestaltung des Schlauchführungselements beschreibt, ohne auf die Anordnung in einer Roboterhandachse einzugehen.

Eine herkömmliche Roboterhandachse ist ferner aus DE 101 39 088 A1 bekannt.

Darüber hinaus ist aus DE 37 15 118 A1 eine Versorgungsleitungsanordnung für einen Roboter bekannt, die sich jedoch nicht für eine Integration in eine Roboterhandachse eignet.

Schließlich ist aus DE 201 14 231 U1 eine sogenannte Hybridleitung bekannt, in die eine Druckluftleitung, eine elektrische Leitung und ein Lichtwellenleiter integriert sind.

Ferner ist zum Stand der Technik auf EP 0 756 918 A und EP 0 873 826 A hinzuweisen.

Der Erfindung liegt deshalb die Aufgabe zugrunde, die Schlauchführung in einer Roboterhandachse entsprechend zu verbessern.

Diese Aufgabe wird durch eine Roboterhandachse gemäß Anspruch 1 gelöst.

Die Erfindung umfasst die allgemeine technische Lehre, in der Roboterhandachse ein besonderes Schlauchführungselement anzuordnen, das die Schläuche in lateraler Richtung führt und dadurch die vorstehend erwähnte Schlaufenbildung verhindert.

Das Schlauchführungselement weist deshalb vorzugsweise mindestens eine axial verlaufende Führungsbohrung zur Aufnahme des zu führenden Schlauchs auf, wobei die Führungsbohrung in axialer Richtung vorzugsweise vollständig durch das Schlauchführungselement hindurch geht.

In einer Variante der Erfindung weist das Schlauchführungselement mehrere axial hintereinander angeordnete Führungsscheiben mit einem vorgegebenen Außendurchmesser auf, in denen jeweils mindestens eine Führungsbohrung für den zu führenden Schlauch angeordnet ist, wobei die Führungsbohrungen in den einzelnen Führungsscheiben axial fluchtend angeordnet sind. Dies bietet den Vorteil, dass die Schläuche innerhalb der Schlauchführung nicht nur an einer Stelle lateral geführt werden, sondern vorzugsweise über die gesamte Länge der Schlauchführung. Darüber hinaus ermöglicht die Aufteilung des Schlauchführungselements in mehrere axial hintereinander angeordnete Führungsscheiben vorteilhaft eine hohe Biegeflexibilität des Schlauchsführungselements, was insbesondere in einer Roboterhandachse wichtig ist.

Die einzelnen Führungsscheiben des Schlauchführungselements können mechanisch miteinander verbunden sein, um eine axiale Verschiebung der einzelnen Führungsscheiben im montierten Zustand zu vermeiden.

Zum einen besteht hierbei die Möglichkeit, dass lediglich die axial außen liegenden Führungsscheiben mechanisch miteinander verbunden sind, während die axial innen liegenden Führungsscheiben mechanisch voneinander getrennt und nur durch die zu führenden Schläuche oder einen umgebenden Schutzschlauch miteinander verbunden sind.

Zum anderen besteht auch die Möglichkeit, dass sämtliche Führungsscheiben des erfindungsgemäßen Schlauchführungselements mechanisch miteinander verbunden sind.

Die Verbindung der einzelnen Führungsscheiben untereinander erfolgt vorzugsweise durch eine mittig angeordnete elastische Zugseele. Die mittige Anordnung der mechanischen Verbindung der Führungsscheiben ermöglicht vorteilhaft eine große Biegenachgiebigkeit, was insbesondere in einer hochflexiblen Roboterhandachse wichtig ist. Darüber hinaus ist die Zugseele vorzugsweise auch in Axialrichtung elastisch, um entsprechenden Hubbewegungen bei einer Änderung der Stellung der Roboterhandachse nachgeben zu können.

Es besteht jedoch alternativ auch die Möglichkeit, dass sämtliche Führungsscheiben mechanisch voneinander getrennt sind und nur durch die zu führenden Schläuche oder durch einen umgebenden Schutzschlauch miteinander verbunden sind.

In einer anderen Variante der Erfindung erfolgt die Führung der Schläuche durch einen spiralförmig umlaufenden Führungssteg, in dem die axial durchgehende Führungsbohrung angeordnet ist.

Vorteilhaft ist es, wenn sich die einzelnen Führungsscheiben oder die einzelnen Spiralgänge des spiralförmigen Führungsstegs in Radialrichtung nach außen verjüngen. Auf diese Weise wird verhindert, dass benachbarte Führungsscheiben oder benachbarte Spiralgänge des spiralförmigen Führungsstegs bei einer Biegung des erfindungsgemäßen Schlauchführungselements vorzeitig zusammenstoßen und dadurch den Bewegungsspielraum einschränken.

Aus dem gleichen Zweck ist zwischen den einzelnen Führungsscheiben oder zwischen den benachbarten Spiralgängen des spiralförmigen Führungsstegs vorzugsweise jeweils eine Nut mit einer vorgegebenen Nutbreite angeordnet, wobei die Nutbreite vorzugsweise zwischen 5% und 30% des Außendurchmessers des Schlauchführungselements beträgt.

Weiterhin ist zu erwähnen, dass die Führungsbohrung in dem Schlauchführungselement vorzugsweise ein Übermaß gegenüber dem zu führenden Schlauch aufweist, so dass der zu führende Schlauch in der Führungsbohrung axial gleiten kann. Dadurch wird ein Festklemmen des zu führenden Schlauchs in dem erfindungsgemäßen Schlauchführungselement verhindert, da ein derartiges Verklemmen zu unerwünschten mechanischen Spannungen führen könnte.

Ferner sind an den gegenüber liegenden Enden des Schlauchführungselements zwei Befestigungsflansche verdrehsicher angebracht, so dass sich das Schlauchführungselement mit dem darin geführten Schlauchpaket bei einer Drehung der Handachse mitdreht, wodurch verhindert wird, dass die Schläuche an der Innenwand der Schlauchdurchführung schleifen.

In dem bevorzugten Ausführungsbeispiel der Erfindung weist das Schlauchführungselement jedoch nicht nur eine einzige Führungsbohrung auf, sondern eine Vielzahl von Führungsbohrungen, die über den Querschnitt des Schlauchführungselements verteilt angeordnet sind.

Die einzelnen Führungsbohrungen können hierbei unterschiedliche Querschnitte aufweisen, wobei die größeren Führungsbohrungen für die dicken und unflexiblen Schläuche vorzugsweise innen angeordnet sind, während die kleineren Führungsbohrungen für die dünnen und damit flexiblen Schläuche vorzugsweise außen angeordnet sind. Dies ist vorteilhaft, weil die mechanische Belastung in der sogenannten neutralen Faser in der Mitte geringer ist.

Darüber hinaus weist das Schlauchführungselement vorzugsweise eine vorgegebene Biegeelastizität und/oder eine vorgegebene Zugelastizität auf, damit sich das Schlauchführungselement bei einer Änderung der Roboterstellung entsprechend anpassen kann.

Die Führungsscheiben, der spiralförmige Führungssteg, die Befestigungsflansche und/oder die Zugseele bestehen vorzugsweise aus Polyurethan (PU). Besonders vorteilhaft ist es hierbei, wenn die Zugseele aus einem weicheren Material besteht als die Führungsscheiben, der spiralförmige Führungssteg und/oder die Befestigungsflansche.

Die Zugseele kann hierbei als separates Bauteil ausgebildet sein, das mit den Führungsscheiben, dem spiralförmigen Führungssteg und/oder den Befestigungsflanschen verklebt ist.

Es ist jedoch alternativ auch möglich, das Schlauchführungselement mit der Zugseele, den Führungsscheiben bzw. dem spiralförmigen Führungssteg und den Befestigungsflanschen einstückig herzustellen.

Hierbei kann das Schlauchführungselement an den Kontaktflächen zu dem umgebenden Schutzschlauch mit einem Gleitmittel wie beispielsweise Vaseline, bestrichen sein, um die Reibung und damit den Verschleiß zu verringern.

Darüber hinaus weist der Schutzschlauch gegenüber dem darin befindlichen Schlauchführungselement vorzugsweise ein Übermaß auf, wodurch die Reibung und damit der Verschleiß weiter verringert wird.

Ferner umfasst die Erfindung auch einen kompletten Lackierroboter mit einer solchen Handachse.

Weiterhin ist zu erwähnen, dass der im Rahmen der Erfindung verwendete Begriff eines Schlauchs nicht auf Schläuche im engeren Wortsinne beschränkt ist, die ein Fluid führen. Vielmehr umfasst dieser Begriff im Rahmen der Erfindung auch Elektrokabel, Leitungen, Lichtwellenleiter und Ähnliches.

Andere vorteilhafte Weiterbildungen der Erfindung sind in den Unteransprüchen gekennzeichnet oder werden nachstehend zusammen mit der Beschreibung der bevorzugten Ausführungsbeispiele anhand der Figuren näher erläutert. Es zeigen:
- Figur 1: eine Seitenansicht einer Roboterhandachse eines Lackierroboters ohne das erfindungsgemäße Schlauchführungselement,
- Figur 2: eine Perspektivansicht eines Teils des erfindungsgemäßen Schlauchführungselements,
- Figuren 3A und 3B: Perspektivansichten eines Teils des erfindungsgemäßen Schlauchführungselements,
- Figur 4: eine weitere Perspektivansicht des erfindungsgemäßen Schlauchführungselements,
- Figur 5: das in Figur 4 gezeigte Schlauchführungselement im eingebauten Zustand in einem Schutzschlauch,
- Figur 6: eine Querschnittsansicht eines alternativen Ausführungsbeispiels einer Schlauchführung mit einem Schutzschlauch und einem darin angeordneten Schlauchführungselement mit einem spiralförmig umlaufenden Führungssteg sowie
- Figur 7: eine Perspektivansicht des Schlauchführungselements aus Figur 6.

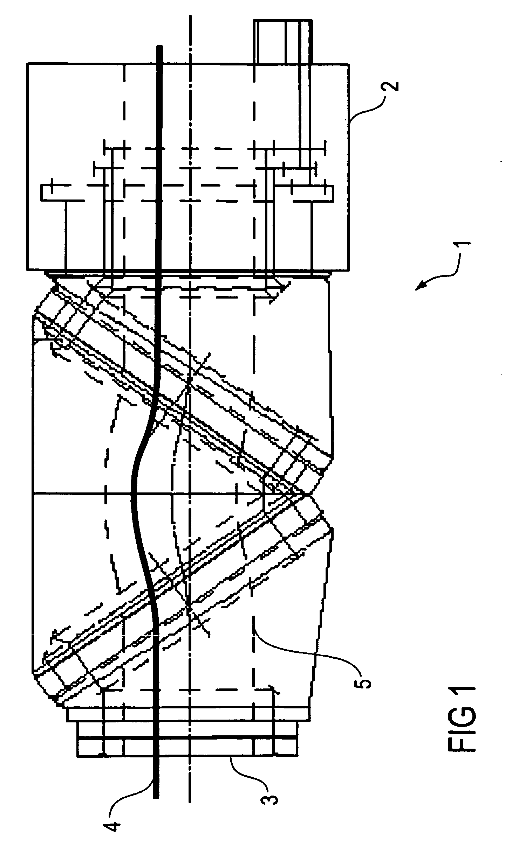

Die Seitenansicht in Figur 1 zeigt eine weitgehend herkömmlich aufgebaute Roboterhandachse 1 eines Lackierroboters, wobei die Roboterhandachse 1 an einem Roboterarm 2 des Lackierroboters befestigt ist und an ihrem distalen Ende einen Befestigungsflansch 3 aufweist, an dem beispielsweise ein Rotationszerstäuber befestigt werden kann.

Durch die Roboterhandachse 1 verlaufen mehrere Schläuche, wobei zur Vereinfachung nur ein einziger Schlauch 4 dargestellt ist. Die durch die Roboterhandachse 1 hindurch laufenden Schläuche führen beispielsweise Beschichtungsmittel oder Antriebsluft zum Antrieb der Rotationszerstäuberturbine zu.

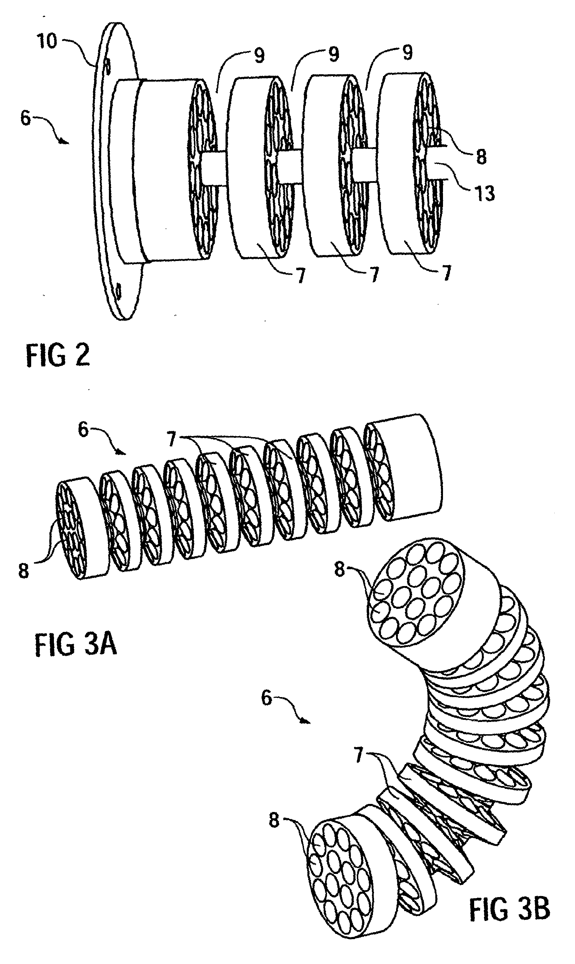

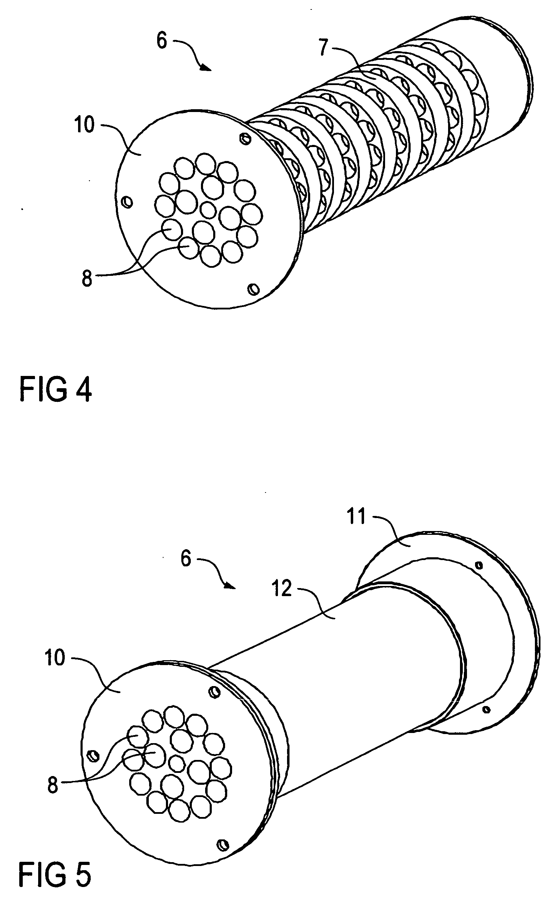

Der Schlauch 4 verläuft hierbei in einer Schlauchdurchführung 5 innerhalb der Roboterhandachse 1, wobei die Führung des Schlauchs 4 innerhalb der Schlauchdurchführung 5 durch ein Schlauchführungselement 6 erfolgen kann, wie es in den Figuren 2-5 bzw. 6 und 7 dargestellt ist und nachfolgend beschrieben wird.

Das Schlauchführungselement 6 weist zahlreiche kreisscheibenförmige, axial beabstandete und in Axialrichtung hintereinander angeordnete Führungsscheiben 7 auf, in denen über den Querschnitt verteilt mehrere Führungsbohrungen 8 angeordnet sind, in denen im montierten Zustand der Schlauch 4 bzw. die nicht dargestellten weiteren Schläuche verlaufen.

Zwischen den einzelnen Führungsscheiben 7 befindet sich jeweils eine Nut 9, um bei einer Biegung der Roboterhandachse 1 zu verhindern, dass die einzelnen Führungsscheiben 7 an ihrem Umfangsrand zusammenstoßen und dadurch den Bewegungsspielraum der Roboterhandachse 1 beschränken.

Aus dem gleichen Grund verjüngen sich die einzelnen Führungsscheiben 7 in radialer Richtung nach außen.

An den beiden gegenüberliegenden Enden weist das Schlauchführungselement 6 jeweils einen Befestigungsflansch 10, 11 auf, wobei die beiden Befestigungsflansche 10, 11 verdrehsicher mit einem Schutzschlauch 12 verbunden sind, der das Schlauchführungselement 6 umgibt.

Darüber hinaus sind die einzelnen Führungsscheiben 7 durch eine elastische Zugseele 13 miteinander verbunden, die sowohl biegeelastisch als auch zugelastisch ist.

Die einzelnen Führungsscheiben 7, die Befestigungsflansche 10, 11 und die Zugseele 13 bestehen hierbei aus Polyurethan (PU), wobei die Zugseele 13 aus einem weicheren Material besteht als die Führungsscheiben 7 und die Befestigungsflansche 10, 11.

Weiterhin ist zu erwähnen, dass auf die Mantelfläche der einzelnen Führungsscheiben 7 ein Gleitmittel wie Vaseline aufgetragen ist, um die verschleißfördernde Reibung zwischen den Führungsscheiben 7 und der Innenwand des Schutzschlauchs 12 zu verringern.

Darüber hinaus weist der Schutzschlauch 12 auch ein Übermaß gegenüber den Führungsscheiben 7 auf, was ebenfalls die Reibung und damit den Verschleiß verringert.

Auch die Führungsbohrungen 8 in den einzelnen Führungsscheiben 7 weisen gegenüber den zu führenden Schläuchen ein Übermaß auf, um ein Festklemmen der zu führenden Schläuche in den Führungsscheiben 7 zu verhindern, da dies zu störenden mechanischen Spannungen führen könnte.

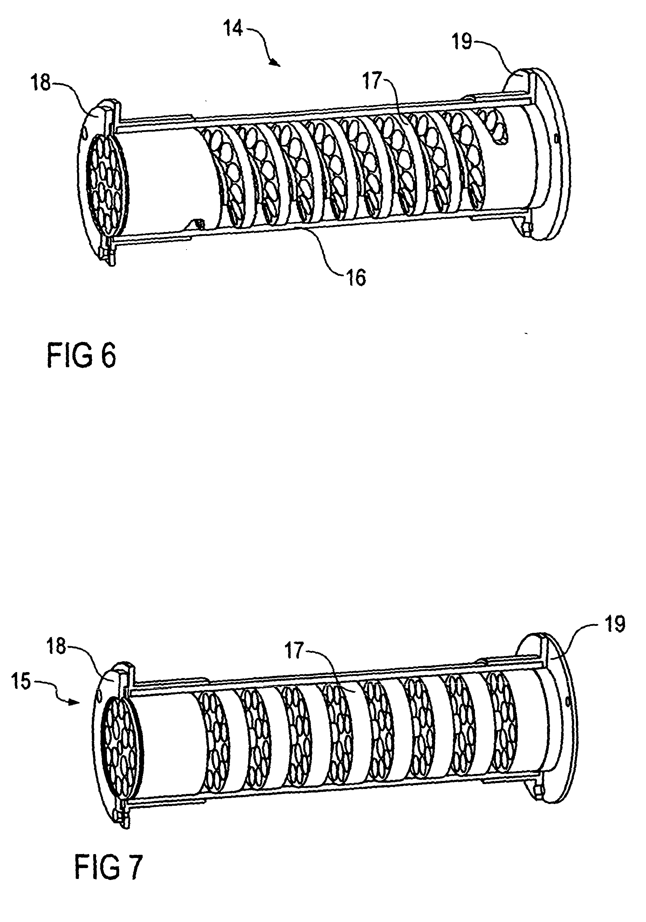

Die Figuren 6 und 7 zeigen ein weiteres Ausführungsbeispiel einer erfindungsgemäßen Schlauchführung mit einem Schlauchführungselement 15, das in einem Schutzschlauch 16 angeordnet ist.

Das Schlauchführungselement 15 weist hierbei einen spiralförmig umlaufenden Führungssteg 17 auf, wobei in den einzelnen Spiralgängen des Führungsstegs 17 jeweils axial fluchtende Führungsbohrungen angeordnet sind, die jeweils einen Schlauch aufnehmen und in seitlicher Richtung führen.

An seinen gegenüberliegenden Enden ist das Schlauchführungselement 15 zusammen mit dem Schutzschlauch 16 verdrehsicher mit zwei Befestigungsflanschen 18, 19 verbunden.

Das Schlauchführungselement 15 besteht hierbei ebenfalls aus Polyurethan (PU), wobei zwischen den benachbarten spiralförmigen Führungsstegen 17 jeweils eine Nut frei bleibt, was eine Biegenachgiebigkeit des Schlauchführungselements 15 ermöglicht.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1: Roboterhandachse
- 2: Roboterarm
- 3: Befestigungsflansch
- 4: Schlauch
- 5: Schlauchdurchführung
- 6: Schlauchführungselement
- 7: Führungsscheiben
- 8: Führungsbohrungen
- 9: Nut
- 10: Befestigungsflansch
- 11: Befestigungsflansch
- 12: Schutzschlauch
- 13: Zugseele
- 14: Schlauchführung
- 15: Schlauchführungselement
- 16: Schutzschlauch
- 17: Führungssteg
- 18: Befestigungsflansch
- 19: Befestigungsflansch

## Patentansprüche

1. Roboterhandachse (1) mit
a) einer Schlauchdurchführung (5) und
b) einer in der Schlauchdurchführung (5) angeordneten Schlauchführung (14) mit einem Schutzschlauch (12, 16),
**gekennzeichnet durch**
c) ein in dem Schutzschlauch (12, 16) angeordnetes Schlauchführungselement (6, 15),
d) wobei das Schlauchführungselement (6, 15) zur Führung mindestens eines Schlauchs (4) in der Schlauchdurchführung (5) in der Roboterhandachse mindestens eine axial verlaufende Führungsbohrung (8) zur Aufnahme des zu führenden Schlauchs (4) aufweist,
e) während an den gegenüber liegenden Enden des Schlauchführungselements (6, 15) zwei Befestigungsflansche (10, 11, 18, 19) verdrehsicher angebracht sind,
f) wobei die Befestigungsflansche (10, 11, 18, 19) an der Roboterhandachse befestigt sind und verdrehsicher mit dem Schutzschlauch (12, 16) verbunden sind,
g) so dass sich das Schlauchführungselement (6, 15) mit dem darin geführten Schlauchpaket bei einer Drehung der Roboterhandachse (1) mitdreht.

2. Roboterhandachse (1) nach Anspruch 1, **gekennzeichnet durch** mehrere axial hintereinander angeordnete Führungsscheiben (7) mit einem vorgegebenen Außendurchmesser, in denen jeweils mindestens eine Führungsbohrung (8) für den Schlauch (4) angeordnet ist, wobei die Führungsbohrungen (8) in den einzelnen Führungsscheiben (7) axial fluchtend angeordnet sind.

3. Roboterhandachse (1) nach Anspruch 2, **dadurch gekennzeichnet, dass** sämtliche Führungsscheiben (7) mechanisch miteinander verbunden sind.

4. Roboterhandachse (1) nach Anspruch 2, **dadurch gekennzeichnet, dass** die axial außen liegenden Führungsscheiben (7) mechanisch miteinander verbunden sind, während die axial innen liegenden Führungsscheiben (7) mechanisch voneinander getrennt sind.

5. Roboterhandachse (1) nach Anspruch 3 oder 4, **dadurch gekennzeichnet, dass** zur mechanischen Verbindung der Führungsscheiben (7) untereinander eine mittig angeordnete elastische Zugseele (13) vorgesehen ist.

6. Roboterhandachse (1) nach Anspruch 2, **dadurch gekennzeichnet, dass** sämtliche Führungsscheiben (7) mechanisch voneinander getrennt sind.

7. Roboterhandachse (1) nach Anspruch 1, **gekennzeichnet durch** einen spiralförmig umlaufenden Führungssteg (17), in dem die Führungsbohrung (8) angeordnet ist, wobei die Führungsbohrung (8) axial durchgeht.

8. Roboterhandachse (1) nach einem der Ansprüche 2 bis 7, **dadurch gekennzeichnet, dass** sich die einzelnen Führungsscheiben (7) oder die einzelnen Spiralgänge des spiralförmigen Führungsstegs (17) in Radialrichtung nach außen verjüngen.

9. Roboterhandachse (1) nach einem der Ansprüche 2 bis 8, **dadurch gekennzeichnet, dass** die einzelnen Führungsscheiben (7) oder die einzelnen Spiralgänge des spiralförmigen Führungsstegs (17) jeweils durch eine Nut (9) mit einer vorgegebenen Nutbreite voneinander getrennt sind.

10. Roboterhandachse (1) nach einem der vorhergehenden Ansprüche, **dadurch gekennzeichnet, dass** die Führungsbohrung (8) einen vorgegebenen Innenquerschnitt aufweist, während der zu führende Schlauch (4) einen vorgegebenen Außenquerschnitt aufweist, wobei der Innenquerschnitt der Führungsbohrung (8) mit einem vorgegebenen Übermaß an den Außenquerschnitt des Schlauchs (4) angepasst ist.

11. Roboterhandachse (1) nach einem der Ansprüche 2 bis 10, **dadurch gekennzeichnet, dass** in den Führungsscheiben (7) oder in dem spiralförmigen Führungssteg (17) mehrere Führungsbohrungen (8) über den Querschnitt verteilt angeordnet sind.

12. Roboterhandachse (1) nach Anspruch 11, **dadurch gekennzeichnet, dass** die einzelnen Führungsbohrungen (8) unterschiedliche Querschnitte aufweisen, wobei die größeren Führungsbohrungen (8) für die dicken Schläuche innen angeordnet sind, während die kleineren Führungsbohrungen (8) für die dünnen Schläuche außen angeordnet sind.

13. Roboterhandachse (1) nach einem der vorhergehenden Ansprüche, **gekennzeichnet durch** eine Biegeelastizität und/oder eine Zugelastizität zur Formanpassung des Schlauchführungselements (6, 15) an eine Formänderung der Schlauchdurchführung (5) aufgrund einer Änderung der Roboterstellung.

14. Roboterhandachse (1) nach einem der vorhergehenden Ansprüche, **dadurch gekennzeichnet, dass** der Schutzschlauch (12, 16) gegenüber dem Schlauchführungselement (6, 15) ein Übermaß aufweist.

15. Lackierroboter mit einer Roboterhandachse (1) nach einem der vorhergehenden Ansprüche.

## Claims

1. A robot wrist (1) with
a) a tube passage (5) and
b) a tube guide (14) with a protective tube (12, 16) arranged in the tube passage (5),
**characterised by**
c) a tube-guidance element (6, 15) arranged in the protective tube (12, 16),
d) whereby the tube-guidance element (6,15) has, for the guidance of at least one tube (4) in the tube passage (5) in the robot wrist, at least one axially extending guide hole (8) to receive the tube (4) to be guided,
e) while two attachment flanges (10, 11, 18, 19) are rotationally fixedly mounted on the opposite ends of the tube-guidance element (6, 15),
f) whereby the attachment flanges (10, 11, 18, 19) are attached to the robot wrist and are rotationally fixedly connected to the protective tube (12, 16),
g) in such a way that the tube-guidance element (6, 15) rotates along with the bundle of tubes guided therein, during a rotation of the robot wrist (1).

2. A robot wrist (1) according to claim 1, **characterised by** several guidance disks (7) arranged axially in sequence, with a predetermined outer diameter, in which at least one respective guidance hole (8) is arranged for the tube (4), whereby the guidance holes (8) are arranged axially aligned in the individual guidance disks (7).

3. A robot wrist (1) according to claim 2, **characterised in that** all guidance disks (7) are mechanically connected together.

4. A robot wrist (1) according to claim 2, **characterised in that** the guidance disks (7) lying axially on the outside are mechanically connected together, whereas the guidance disks (7) lying axially on the inside are mechanically separated from one another.

5. A robot wrist (1) according to claim 3 or 4, **characterised in that** a centrally arranged elastic tension core (13) is provided for the mechanical connection of the guidance disks (7) to one another.

6. A robot wrist (1) according to claim 2, **characterised in that** all the guidance disks (7) are mechanically separated from one another.

7. A robot wrist (1) according to claim 1, **characterised by** a spiral-shaped circumferential guidance web (17) in which the guidance hole (8) is arranged, whereby the guidance hole (8) passes through axially.

8. A robot wrist (1) according to one of claims 2 through 7, **characterised in that** the individual guidance disks (7) or the individual spiral turns of the spiral-shaped guidance web (17) taper outwardly in the radial direction.

9. A robot wrist (1) according to one of the claims 2 to 8, **characterised in that** the individual guidance disks (7) or the individual spiral turns of the spiral-shaped guidance web (17) are separated from one another by a respective groove with a predetermined groove width.

10. A robot wrist (1) according to one of the preceding claims, **characterised in that** the guidance hole (8) has a predetermined inner cross-section, whereas the tube (4) to be guided has a predetermined outer cross-section, whereby the inner cross-section of the guidance hole (8) is adapted with a predetermined oversizing to the outer cross-section of the tube (4).

11. A robot wrist (1) according to one of claims 2 through 10, **characterised in that** several guidance holes (8) are arranged distributed over the cross-section of guidance disk (7) or in the spiral-shaped guidance web (17).

12. A robot wrist (1) according to claim 11, **characterised in that** the individual guidance holes (8) have different cross-sections, where the larger guidance holes (8) for the thick tubes are arranged in the inner region, whereas the smaller guidance holes (8) for the thinner tubes are arranged in the outer region.

13. A robot wrist (1) according to one of the preceding claims, **characterised by** a bending elasticity and/or an extension elasticity for shape adaptation of the tube-guidance element (6, 15) to a shape change of the tube passage (5) due to a change of the robot position.

14. A robot wrist (1) according to one of the preceding claims, **characterised in that** the protective tube (12, 16) is oversized compared to the tube-guidance element (6, 15).

15. A paint robot with a robot wrist (1) according to one of the preceding claims.

## Revendications

1. Poignet de robot (1) comportant
a) un passage pour tuyaux (5) et
b) un guidage de tuyaux (14) avec un tuyau de protection (12, 16), agencé dans le passage pour tuyaux (5),
**caractérisé par**
c) un élément de guidage des tuyaux (6, 15) monté dans le tuyau de protection (12, 16),
d) l'élément de guidage des tuyaux (6, 15), en vue de guider au moins un tuyau (4) dans le passage pour tuyaux (5) dans le poignet de robot, comportant au moins un perçage de guidage (8), orienté dans le sens axial et destiné à recevoir le tuyau (4) à guider,
e) tandis que, sur les extrémités opposées de l'élément de guidage des tuyaux (6, 15) sont montées deux brides de fixation (10, 11, 18, 19) de manière immobile en rotation,
f) les brides de fixation (10,11, 18, 19) étant fixées contre le poignet de robot et étant assemblées de manière immobile en rotation avec le tuyau de protection (12, 16),
g) de telle sorte que, lors d'une rotation du poignet de robot (1), l'élément de guidage des tuyaux (6, 15) est également entraîné en rotation avec le paquet de tuyaux guidé dans celui-ci.

2. Poignet de robot (1) selon la revendication 1, **caractérisé par** plusieurs disques de guidage (7) ayant un diamètre extérieur prédéfini, qui sont montés les uns derrière les autres dans le sens axial et dans chacun desquels est réalisée au moins une forure de guidage (8) pour le tuyau (4), les perçages de guidage (8) étant alignés dans le sens axial dans les différents disques de guidage (7).

3. Poignet de robot (1) selon la revendication 2, **caractérisé en ce que** tous les disques de guidage (7) sont reliés mécaniquement les uns aux autres.

4. Poignet de robot (1) selon la revendication 2, **caractérisé en ce que** les disques de guidage (7) extérieurs dans le sens axial sont reliés mécaniquement l'un à l'autre, tandis que les disques de guidage (7) intérieurs dans le sens axial sont séparés mécaniquement les uns des autres.

5. Poignet de robot (1) selon la revendication 3 ou 4, **caractérisé en ce que**, pour relier mécaniquement les disques de guidage (7) les uns aux autres, il est prévu une âme de traction (13) élastique, disposée au milieu.

6. Poignet de robot (1) selon la revendication 2, **caractérisé en ce que** tous les disques de guidage (7) sont séparés mécaniquement les uns aux autres.

7. Poignet de robot (1) selon la revendication 1, **caractérisé par** une branche de guidage (17) hélicoïdale, dans laquelle est réalisée la forure de guidage (8), le perçage de guidage (8) la traversant dans le sens axial.

8. Poignet de robot (1) selon l'une quelconque des revendications 2 à 7, **caractérisé en ce que** les différents disques de guidage (7) ou les différents pas de la branche de guidage (17) hélicoïdale se rétrécissent vers l'extérieur dans le sens radial.

9. Poignet de robot (1) selon l'une quelconque des revendications 2 à 8, **caractérisé en ce que** les différents disques de guidage (7) ou les différents pas de la branche de guidage (17) hélicoïdale sont séparés les uns des autres respectivement par une rainure (9) ayant une largeur prédéfinie.

10. Poignet de robot (1) selon l'une quelconque des revendications précédentes, **caractérisé en ce que** le perçage de guidage (8) a une section intérieure prédéfinie, tandis que le tuyau (4) à guider a une section extérieure prédéfinie, la section intérieure du perçage de guidage (8) étant surdimensionnée de manière prédéfinie par rapport à la section extérieure du tuyau (4).

11. Poignet de robot (1) selon l'une quelconque des revendications 2 à 10, **caractérisé en ce que** dans les disques de guidage (7) ou dans la branche de guidage 17 hélicoïdale sont réalisées plusieurs perçages de guidage (8) répartis sur toute la section.

12. Poignet de robot (1) selon la revendication 11, **caractérisé en ce que** les différents perçages de guidage (8) ont des sections différentes, les plus grands perçages de guidage (8) étant réalisés à l'intérieur pour les gros tuyaux, alors que les plus petits perçages de guidage (8) sont réalisés à l'extérieur pour les tuyaux minces.

13. Poignet de robot (1) selon l'une quelconque des revendications précédentes, **caractérisé par** une élasticité en flexion et/ou une élasticité en traction pour que l'élément de guidage des tuyaux (6, 15) s'adapte par sa forme à une variation de forme du passage pour tuyaux (5) à la suite d'un changement de position du robot.

14. Poignet de robot (1) selon l'une quelconque des revendications précédentes, **caractérisé en ce que** le tuyau de protection (12, 16) est surdimensionné par rapport à l'élément de guidage des tuyaux (6, 15).

15. Robot de peinture comportant un poignet de robot (1) selon une des revendications précédentes.
